(19) Europäisches Patentamt / European Patent Office / Office européen des brevets

(11) **EP 3 122 122 A1**

(12) **EUROPEAN PATENT APPLICATION**
published in accordance with Art. 153(4) EPC

(43) Date of publication:
**25.01.2017 Bulletin 2017/04**

(21) Application number: **15765043.3**

(22) Date of filing: **14.01.2015**

(51) Int Cl.:
**H04W 52/30** (2009.01)  **H04J 1/00** (2006.01)
**H04W 52/40** (2009.01)  **H04W 72/04** (2009.01)

(86) International application number:
**PCT/JP2015/050806**

(87) International publication number:
**WO 2015/141258 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.03.2014 JP 2014058259**

(71) Applicant: **NTT DOCOMO, INC.**
**Chiyoda-ku**
**Tokyo 100-6150 (JP)**

(72) Inventors:
• **KAKISHIMA, Yuichi**
**Tokyo 100-6150 (JP)**

• **UCHINO, Tooru**
**Tokyo 100-6150 (JP)**
• **TAKEDA, Kazuki**
**Tokyo 100-6150 (JP)**
• **NAGATA, Satoshi**
**Tokyo 100-6150 (JP)**
• **TAKAHASHI, Hideaki**
**Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57) The present invention is designed to adequately execute transmission power control in dual connectivity (DC). A user terminal communicates with a plurality of cell groups, each cell group being comprised of one or more cells that use different frequencies, and has a power control section that controls the maximum transmission power value for each cell group, which is given by splitting the allowable maximum transmission power of the subject user terminal semi-statically, and controls the maximum transmission power value of a specific cell group to be changed when a predetermined condition is met, and a transmission section that reports the maximum transmission power value after the change to a radio base station forming the cell group.

DYNAMIC POWER-SHARING (CA)

FIG.3A

SEMI-STATIC POWER-SPLITTING

$P_s$

$P_m$

TOTAL TRANSMIT POWER

TIME

SeNB

UE

MeNB

FIG.3B

**Description**

Technical Field

The present invention relates to a user terminal, a radio base station and a radio communication method in a next-generation mobile communication system.

Background Art

In the UMTS (Universal Mobile Telecommunications System) network, the specifications of long term evolution (LTE) have been drafted for the purpose of further increasing high speed data rates, providing lower delays and so on (see non-patent literature 1).

In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Successor systems of LTE -- referred to as, for example, "LTE-advanced" or "LTE enhancement" -- have been under study for the purpose of achieving further broadbandization and increased speed beyond LTE, and the specifications thereof have been drafted as LTE Rel. 10/11.

Also, the system band of LTE Rel. 10/11 includes at least one component carrier (CC), where the LTE system band constitutes one unit. Such bundling of a plurality of CCs into a wide band is referred to as "carrier aggregation" (CA).

In LTE Rel. 12, which is a more advanced successor system of LTE, various scenarios to use a plurality of cells in different frequency bands (carriers) are under study. When the radio base stations to form a plurality of cells are substantially the same, the above-described carrier aggregation (CA) is applicable. On the other hand, when the radio base stations to form a plurality of cells are completely different, dual connectivity (DC) may be employed.

Note that carrier aggregation (CA) may be referred to as "intra-eNB CA," and dual connectivity may be referred to as "inter-eNB CA."

Citation List

Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

Summary of Invention

Technical Problem

In dual connectivity (DC), a master base station MeNB and a secondary base station SeNB carry out scheduling independently, which means that the two base stations are asynchronous. Consequently, when each base station controls transmission power independently, there is a threat that the sum of the transmission power in user terminals reaches the allowable maximum transmission power. Consequently, the transmission power control in carrier aggregation (CA) cannot be applied on an as-is basis.

The present invention has been made in view of the above, and it is therefore an object of the present invention to provide a user terminal, a radio base station and a radio communication method which enable transmission power control to be carried out adequately in dual connectivity (DC).

Solution to Problem

The user terminal of the present invention provides a user terminal that communicates with a plurality of cell groups, each cell group being comprised of one or more cells that use different frequencies, and this user terminal has a power control section that controls a maximum transmission power value for each cell group, which is given by splitting allowable maximum transmission power of the subject user terminal semi-statically, and controls the maximum transmission power value of a specific cell group to be changed when a predetermined condition is met, and a transmission section that reports the maximum transmission power value after the change to a radio base station forming the cell group.

Advantageous Effects of Invention

According to the present invention, transmission power control can be carried out adequately in dual connectivity (DC).

Brief Description of Drawings

FIGs. 1 provide schematic diagrams of carrier aggregation (CA) and dual connectivity (DC);
FIG. 2 is a diagram to explain cell groups in dual connectivity (DC);
FIGs. 3 provide diagrams to explain the transmission power control in carrier aggregation (CA) and in dual connectivity (DC);
FIGs. 4 provide diagrams to show examples of new control signals in the transmission power control in dual connectivity (DC);
FIG. 5 is a diagram to explain an example of calculating ramp-up values based on extra power;
FIGs. 6 provide diagrams to explain a split point in the event dual connectivity (DC) is formed;
FIG. 7 is a diagram to explain a PHR for a master base station MeNB and a PHR for a secondary base station SeNB;
FIGs. 8 provide diagrams to explain methods of calculating PHRs in carrier aggregation (CA) and dual connectivity (DC);
FIG. 9 is a diagram to show an example of a schematic structure of a radio communication system according to the present embodiment;
FIG. 10 is a diagram to show an example of an overall structure of a radio base station according to the present embodiment;
FIG. 11 is a diagram to show an example of a functional structure of a radio base station according to the present embodiment;
FIG. 12 is a diagram to show an example of an overall structure of a user terminal according to the present embodiment; and
FIG. 13 is a diagram to show an example of a functional structure of a user terminal according to the present embodiment.

Description of Embodiments

Now, an embodiment of the present invention will be described below in detail with reference to the accompanying drawings. Note that, when the following description mentions a physical downlink control channel (PDCCH: Physical Downlink Control Channel), this will include an enhanced physical downlink control channel (EPDCCH: Enhanced PDCCH) as well.

In the LTE-A system, a HetNet (Heterogeneous Network), in which small cells, each having a local coverage area of a radius of approximately several tens of meters, are formed within a macro cell having a wide coverage area of a radius of approximately several kilometers, is under study. Carrier aggregation (CA) and dual connectivity (DC) are applicable to the HetNet structure.

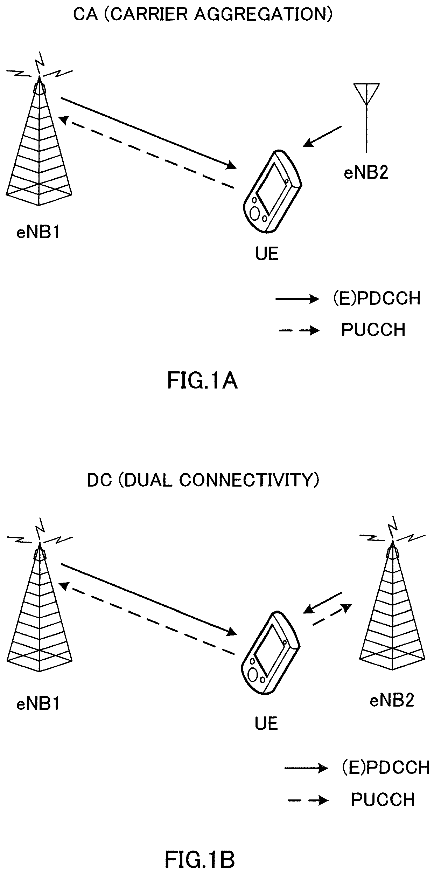

FIGs. 1 provide diagrams to explain carrier aggregation (CA) and dual connectivity (DC). In the examples shown in FIG. 1, a user terminal UE communicates with radio base stations eNB1 and eNB2.

FIGs. 1 show control signals that are transmitted and received via a physical downlink control channel (PDCCH) and a physical uplink control channel (PUCCH: Physical Uplink Control Channel). For example, downlink control information (DCI) is transmitted using the PDCCH. Also, uplink control information (UCI: Uplink Control Information) is transmitted via the PUCCH.

FIG. 1A shows communication among the radio base station eNB1 and eNB2 and the user terminal UE by way of carrier aggregation (CA). In the example shown in FIG. 1A, eNB1 is a radio base station (hereinafter referred to as a "macro base station") to form a macro cell, and eNB2 is a radio base station (hereinafter referred to as a "small base station") to form a small cell.

For example, the small base station may be structured like an RRH (Remote Radio Head) that connects with the macro base station. When carrier aggregation (CA) is employed, one scheduler (for example, the scheduler provided in macro base station eNB1) schedules multiple cells.

In a structure in which a scheduler provided in a macro base station schedules multiple cells, each base station may be connected using, for example, an ideal backhaul that provides a high-speed and low-delay channel, such as optical fiber.

FIG. 1B shows communication among the radio base stations eNB1 and eNB2 and the user terminal UE by way of dual connectivity (DC). In the example shown in FIG. 1B, eNB1 and eNB2 are both macro base stations.

When dual connectivity (DC) is employed, a plurality of schedulers are provided independently, and these multiple schedulers (for example, the scheduler provided in macro base station eNB1 and the scheduler provided in macro base station eNB2) each control the scheduling of one or more cells they have control over.

In the structure in which the scheduler provided in macro base station eNB1 and the scheduler provided in macro base station eNB2 each control the scheduling of one or more cells they have control over, each base station may be connected using, for example, a non-ideal backhaul to produce delays that cannot be ignored, such as the X2 interface.

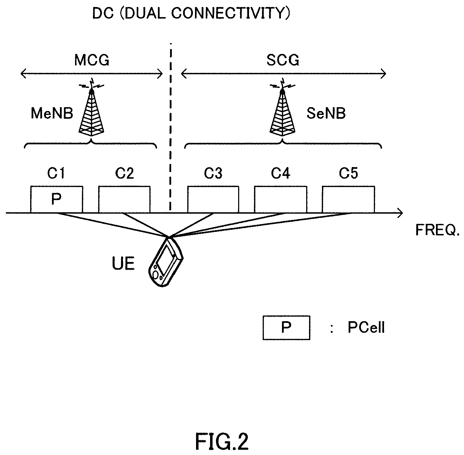

As shown in FIG. 2, in dual connectivity (DC), each radio base station configures a cell group (CG) that is comprised of one or a plurality of cells. Each cell group (CG) is comprised of one or more cells formed by the same radio base station, or one or more cells formed by the same transmission point such as a transmitting antenna apparatus, a transmission station and so on.

The cell group (CG) to include the PCell will be referred to as the "master cell group (MCG: Master CG)," and the cell groups (CGs) other than the master cell group (MCG) will be referred to as "secondary cell groups (SCGs: Secondary CGs)." Each cell group (CG) can execute carrier aggregation (CA) with two or more cells.

The radio base station where the master cell group (MCG) is configured will be referred to as the "master base station (MeNB: Master eNB)," and the radio base station where an SCG is configured will be referred to as a "secondary base station (SeNB: Secondary eNB)."

The total number of cells to constitute the master cell group (MCG) and the secondary cell groups (SCGs) is configured to be equal to or less than a predetermined value (for example, five cells). This predetermined value may be set in advance, or may be configured semi-statically or dynamically between the radio base stations eNB and the user terminal UE. Also, depending on the implementation of user terminals UE, the sum value of the cells to constitute the master cell group (MCG) and the secondary cell groups (SCGs) and the combination of cells that can be configured may be reported to the radio base stations eNB in the form of capability signaling.

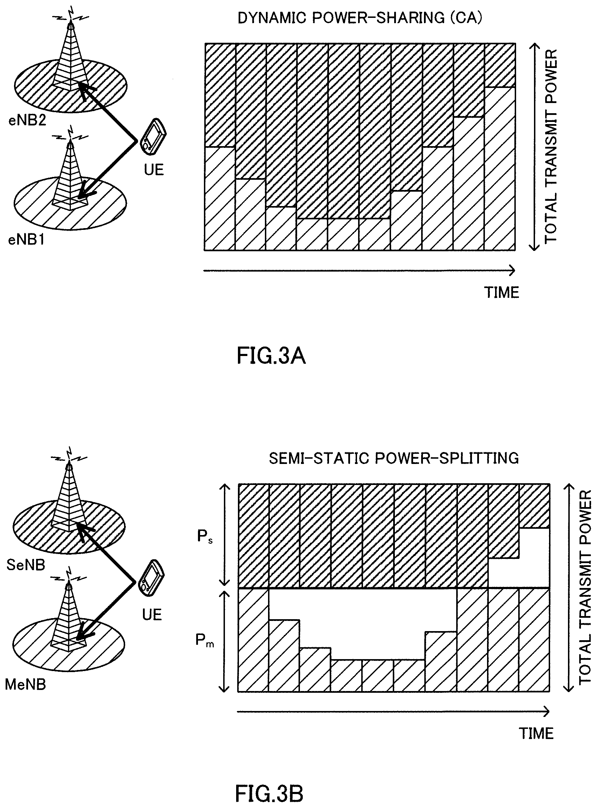

FIGs. 3 provide diagrams to explain the transmission power control (TPC) in carrier aggregation (CA) and in dual connectivity (DC).

In conventional LTE and LTE-A systems, the uplink signal transmission power $P_{PUSCH,c}(i)$ of a user terminal per component carrier (CC) can be represented by following equation 1:

$$P_{PUSCH,c}(i)=\min\{P_{CMAX,c}(i),10\log_{10}(M_{PUSCH,c}(i))+P_{O\_PUSCH,c}(j)+\alpha_c(j)\cdot$$

$$PL_c+\Delta_{TF,c}(i)+f_c(i)\}[dBm] \quad \ldots (Equation\ 1)$$

Here, $P_{CMAX,c}(i)$ is the maximum transmission power of a user terminal per component carrier (CC), $M_{PUSCH,c}(i)$ is the number of PUSCH (Physical Uplink Shared Channel) resource blocks, $P_{O\_PUSCH,c}(j)$ is a parameter that relates to transmission power offset, reported from base stations, $\alpha$ is a fractional TPC (Transmission Power Control) slope parameter, specified by base stations, $PL_c$ is the propagation loss (path loss), $\Delta_{TF,c}(i)$ is a power offset value based on the modulation scheme and the coding rate, and $f_c(i)$ is a correction value by a TPC command.

The user terminal determines the transmission power based on above equation 1.

The user terminal feeds back a PHR (Power Headroom Report) for reporting the user terminal's extra transmission power to the base stations. The PHR is formed with a PH, which represents information about the difference between the user terminal's transmission power $P_{PUSCH}$ and the maximum transmission power $P_{CMAX,c}$, and a two-bit reserved field.

As represented by above equation 1, the user terminal's transmission power $P_{PUSCH}$ is calculated based on the path loss $PL_c$, which is estimated from the downlink. The user terminal feeds back a PHR to the base stations when, for example, the value of fluctuation of path loss is greater than a predetermined value.

The user terminal's extra transmission power $PH_{type1,c}(i)$ can be represented by following equation 2:

$$PH_{type1,c}(i)=P_{CMAX,c}(i)-\{10\log_{10}(M_{PUSCH,c}(i))+P_{O\_PUSCH,c}(j)+\alpha_c(j)\cdot$$

$$PL_c+\Delta_{TF,c}(i)+f_c(i)\}[dB]\ldots \quad (Equation\ 2)$$

As shown in FIG. 3A, in carrier aggregation (CA), one base station (for example, macro base station eNB1) controls the scheduling of two base stations. That is, macro base station eNB1 can execute transmission power control so that transmission power is adjusted, on a dynamic basis, within a range in which the sum of the user terminal's transmission power for two base stations eNB1 and eNB2 does not exceed the allowable maximum transmission power.

Meanwhile, in dual connectivity (DC), the master base station MeNB and the secondary base station SeNB each carry out scheduling independently, and the two base stations are asynchronous. Consequently, when each base station controls transmission power independently, there is a threat that the sum of the user terminal's transmission power reaches the allowable maximum transmission power. Consequently, the transmission power control of carrier aggregation (CA) cannot be applied on an as-is basis.

The simplest solution to the transmission power control in dual connectivity (DC), as shown in FIG. 3B, splitting a user terminal's transmission power semi-statically may be a possible method. According to this method, maximum transmission power $P_m$ and $P_s$ are configured as thresholds for each cell group (CG), so that the master base station MeNB and the secondary base station SeNB have only to control transmission power within the ranges of the maximum transmission power $P_m$ and $P_s$ for the respective cell groups. Note that the maximum transmission power $P_m$ represents the maximum transmission power on the master base station MeNB side. The maximum transmission power $P_s$ represents the maximum transmission power on the secondary base station SeNB side.

In this way, when the user terminal's transmission power is split semi-statically and the maximum transmission power $P_m$ and $P_s$ are configured as thresholds, there may be three patterns in which "transmission power reaches the maximum transmission power." That is, the pattern in which the transmission power on the master base station MeNB side alone reaches the maximum transmission power $P_m$, the pattern in which the transmission power on the secondary base station SeNB side alone reaches the maximum transmission power $P_s$, and the pattern in which the transmission power on both the master base station MeNB side and the secondary base station SeNB side reaches the maximum transmission power $P_m$ and $P_s$, respectively, and the total transmission power reaches the maximum transmission power $P_t$ (total).

When transmission power is split semi-statically, cases might occur where split loss (the white areas shown in FIG. 3B) is produced. By this means, useless transmission power remains, resulting in a problem of uplink throughput deterioration from the perspective of user data. In particular, when transmission power runs short on the master base station MeNB side and the SRB (Signaling Radio Bearer) becomes incommunicable, the problem arises that connectivity between the user terminal and the network cannot be maintained.

Based upon a transmission power control method to split the transmission power of a user terminal semi-statically, the present inventors have come up with the idea of executing control so that, when the transmission power on either base station's side reaches a threshold, allowing the user terminal or the base station to change the threshold flexibly, on an as-needed basis. According to this control, when transmission power reaches the threshold on either base station side, power is allocated to the side that requires the greater transmission power. In particular, in order to follow rough changes of path loss, autonomous control of the threshold by the user terminals is effective.

Now, based upon a transmission power control method to split the transmission power of a user terminal semi-statically, a method will be described below, in which control is executed so that, when transmission power reaches the threshold on either base station's side, the user terminal or the base station changes the threshold flexibly, on an as-needed basis.

Step 0: The master base station MeNB configures the maximum transmission power $P_m$ and $P_s$ to be configured for each cell group (CG), in the user terminal and the secondary base station SeNB. Here, if the user terminal's maximum transmission power $P_{ue}$ is 23[dBm], $P_m + \Sigma P_s \leq P_{ue}$ (for example, 23[dBm]) or $P_m \leq P_{ue}$ and $P_s \leq P_{ue}$ is satisfied.

Step 1: The master base station MeNB and the secondary base station SeNB carry out existing transmission power control within the ranges of the maximum transmission power $P_m$ and $P_s$ that are configured.

Step 2: When the transmission power on the master base station MeNB side reaches the maximum transmission power $P_m$, the user terminal controls the value of the maximum transmission power $P_m$ to be raised, in order to allocate even more power to the master base station MeNB side. In this case, control to lower the value of the maximum transmission power $P_s$ in accordance with the maximum transmission power $P_m$ may be executed so as to maintain the total maximum transmission power on a certain level, or the transmission power on the SeNB side may be held without changing the maximum transmission power $P_s$.

To raise the value of the maximum transmission power $P_m$, for example, a method to reduce rough changes of power by using ramping may be employed. Note that the predetermined value of ramping is signaled to the user terminal in advance, or may be known implicitly. At this time, it is possible to realize transmission power control that does not rely upon instantaneous resource allocation and/or instantaneous fading by using TTT (Time To Trigger) or protection steps.

When the maximum transmission power $P_m$ and $P_s$ change, the user terminal sends a report on the uplink. The content of the report may include the PHs for $P_m$ and $P_s$ after the change, and/or $P_m$ and $P_s$. Also, when an uplink grant cannot be acquired, the user terminal may transmit a scheduling request. In this case, the existing PHR mechanism may be used.

Step 3: When, despite the operation of step 2, the state in which the transmission power on the master base station MeNB side has reached the maximum transmission power $P_m$ is not resolved, the user terminal raises the value of the maximum transmission power $P_m$ even more, and transmits a PHR or a scheduling request.

6

In this case, the transmission power on the secondary base station SeNB side lowers gradually, which might lead to a shortage of transmission power for uplink communication. However, the secondary base station SeNB can learn that little transmission power is allocated to the subject base station from a report from the master base station MeNB or from loss of uplink synchronization due to failed CQI (Channel Quality Indicator) delivery. Furthermore, when there are no CQI resources and a scheduling request is triggered following a PH that is produced, a RACH (Random Access Channel) problem occurs in the secondary cell groups (SCGs). The RACH problem refers to the situation where a user terminal transmits a scheduling request for transmitting an Scell PH, but the PRACH (Physical Random Access Channel) does not arrive because the maximum transmission power $P_s$ on the secondary base station SeNB side is low. When a RACH problem occurs, it is possible to send a report to the effect that very little transmission power is allocated to the secondary base station SeNB, from the master base station MeNB, via a backhaul.

Step 4: When the state in which the transmission power on the master base station MeNB side has reached the maximum transmission power $P_m$ resolves, or when there is no more data on the master base station MeNB side, or in both of these cases, the threshold is changed, or the threshold is re-set or made close to the initial value, in order to allocate transmission power to the secondary base station SeNB side. To change the threshold, for example, the user terminal may apply the control of step 2 to the secondary base station SeNB side, or the master base station MeNB may send out an explicit report. However, since the user terminal does not manage the timing to transmit control information, there is a threat that, when the user terminal changes the threshold autonomously, $P_m$ boost has to be re-done every time an SRB is transmitted. Consequently, it is preferable to change the threshold following commands from the master base station MeNB.

As for the method of reporting changes of the threshold from the master base station MeNB side, although the RRC (Radio Resource Control) layer, the MAC (Media Access Control) layer or the physical layer may be used, it is preferable to employ a MAC CE (Control Element) so as to allow somewhat dynamic control.

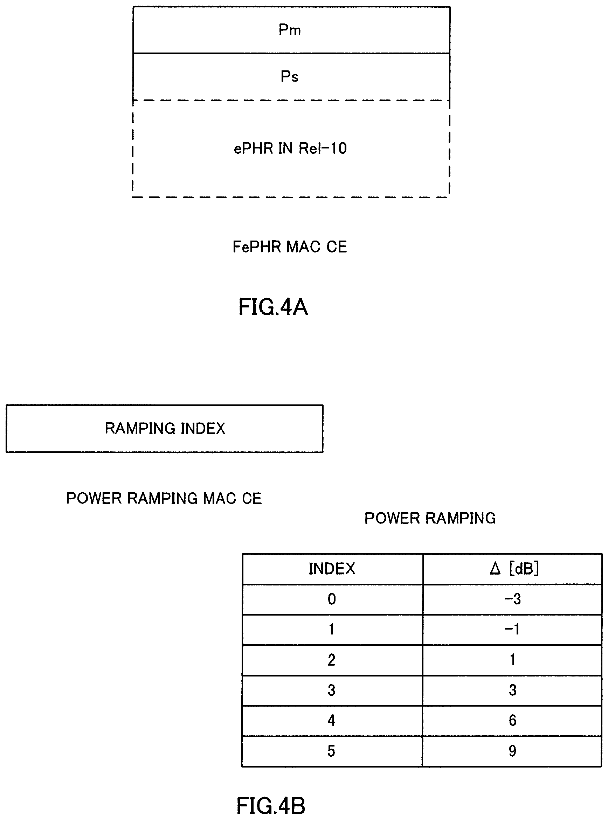

FIGs. 4 provide diagrams to show examples of new control signals in the above-described transmission power control.

FIG. 4A show a control signal to allow the user terminal to report the maximum transmission power $P_m$ and $P_s$, in addition to a PHR, to the base station. The "further enhanced PHR (FePHR) MAC CE format" that is used then contains, as shown in FIG. 4A, an existing PHR, and the maximum transmission power $P_m$ and $P_s$.

FIG. 4B shows a control signal to allow the user terminal to report a ramping index, which is a new variable, to the base station. The power ramping MAC CE that is used then contains a ramping index, as shown in FIG. 4B. The ramping index is defined as shown in FIG. 4B.

The above-described transmission power control presumes that, when, for example, the transmission power on the master base station MeNB side is detected to have reached the maximum transmission power $P_m$, the value of the maximum transmission power $P_m$ is controlled to be raised in order to allocate even more power to the master base station MeNB side. In this case, there is a threat that transmission power becomes tight in base stations apart from the master base station MeNB -- for example, in secondary base stations SeNB. By contrast with this, it is also possible to provide a function for lowering the upper limit of the maximum transmission power P of a subject base station when the subject base station's transmission data has some room, and giving power resources to other base stations.

Referring back to step 0 of the above-described transmission power control, the method, whereby the master base station MeNB configures the maximum transmission power $P_m$ and $P_s$ to be configured for each cell group (CG) in the user terminal and the secondary base station SeNB, will be described. In particular, the method of configuring the maximum transmission power $P_m$ and $P_s$ so that the sum of the maximum transmission power $P_m$ and $P_s$ becomes equal to or lower than the user terminal's maximum transmission power $P_{ue}$ will be described. At this time, if the user terminal's maximum transmission power $P_{ue}$ is 23[dBm], $P_m+\Sigma P_s \leq 23$[dBm] may be satisfied, or $P_m \leq P_{ue}$ and $P_s \leq P_{ue}$ may be satisfied.

At this time, by specifying the sum value of $P_{cmax,c}$, which is the maximum transmission power of the user terminal per component carrier (CC), not to exceed $P_{cmax}$, which is the total transmission power ($\Sigma P_{cmax,c} \leq P_{cmax}$), the maximum transmission power $P_m$ and $P_s$ are limited. Also, it is equally possible to make each $P_{cmax,c}$ equal to or lower than $P_{cmax}$, so that the flexibility of power control may improve.

Also, by changing the maximum transmission power of each component carrier (CC) depending on the number of uplink component carriers (CC), the maximum transmission power $P_m$ and $P_s$ are limited.

With the two examples described above, a method to apply an offset of the reciprocal of the number of component carriers (CCs) -- that is, an offset of $-10\log_{10}$ (the number of CCs) [dB] -- may be employed. Also, for example, a method to subtract the excess, which is represented by $P_m+\Sigma P_s-P_{cmax}$, may be employed. For example, a method to reduce the impact on $P_m$ by subtracting the excess from $P_s$ may be employed, or a method to split the excess evenly between $P_m$ and $P_s$ may be employed.

The master base station MeNB has the liberty of allocating power to component carriers (CCs), on a per base station basis, by configuring the maximum transmission power per base station. Also, the master base station MeNB may configure the maximum transmission power per component carrier (CC), so that the master base station MeNB may control the power of every component carrier (CC) in a centralized manner, altogether.

Referring back to steps 2 and 3 of the above-described transmission power control, the conditions for executing control for raising the value of the maximum transmission power $P_m$ will be described.

The value of the maximum transmission power $P_m$ may be controlled to be raised on condition that the desired transmission power value for the master base station MeNB reaches the power limit -- exceeds $P_{cmax,c}$, for example.

The value of the maximum transmission power $P_m$ may also be controlled to be raised on condition that the calculated value of the user terminal's transmission power falls below a reference value -- falls below $P_{cmax}$, for example. This is because, when the calculated value of the user terminal's transmission power exceeds a reference value, no extra power (the white areas shown in FIG. 3B) is produced, and the increase of $P_m$ constrains the power of the secondary base station SeNB.

Whether or not to control the value of the maximum transmission power $P_m$ to be raised may be determined depending on the transmission channel of the master base station MeNB. For example, by prioritizing cases where a transmission channel from the master base station MeNB includes control information like an uplink control channel (PUCCH), a physical random access channel (PRACH) or an uplink shared channel (PUSCH) to which uplink control information (UCI) is allocated, and allowing control to raise the value of the maximum transmission power $P_m$, minimal connectivity can be secured.

Whether or not to control the value of the maximum transmission power $P_m$ to be raised may be determined based on the type of the bearer (for example, voice or data).

Whether or not to control the value of the maximum transmission power $P_m$ to be raised may be determined depending on whether the base station where the transmission power has reached the maximum transmission power is the master base station MeNB or the secondary base station SeNB. For example, if the base station where the transmission power has reached the maximum transmission power is the master base station MeNB, the value of the maximum transmission power $P_m$ is controlled to be raised, while, if the base station where the transmission power has reached the maximum transmission power is the secondary base station SeNB, the control to raise the value of the maximum transmission power $P_s$ at the risk of stepping into the field of the master base station MeNB is not executed. Also, even more flexible power control may be implemented by making it possible to specify, per component carrier (CC), whether or not to control the value of the maximum transmission power Pm to be raised.

Referring again to steps 2 and 3 in the above-described transmission power control, the method of determining the value of the maximum transmission power $P_m$ will be described.

The value of the maximum transmission power $P_m$ may be controlled to be the desired transmission power value of the master base station MeNB. By this means, power for the master base station MeNB is secured with the highest priority, so that the impact on coverage can be minimized.

It is also possible to execute control so that the value given by subtracting the transmission power of the secondary base station SeNB from the user terminal's maximum possible transmission power $P_t$ is made the value of the maximum transmission power $P_m$ (or the upper limit of $P_m$). Still, the transmission power of the secondary base station SeNB is made equal to or lower than the maximum transmission power $P_s$.

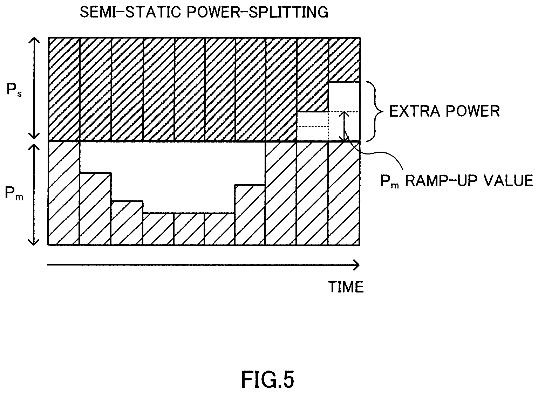

The maximum transmission power $P_m$ may be controlled to increase (ramp up) gradually (accumulate type). By this means, it is possible to reduce rough drops in communication quality with respect to the secondary base station SeNB, while maintaining the coverage of the master base station MeNB. The value of power to ramp up (ramp up step) may be reported to user terminal through, for example, RRC (Radio Resource Control), or may assume a value that is determined in advance. Also, the ramp-up value can be calculated based on extra power (the white areas shown in FIG. 3B). To be more specific, extra power is split in a predetermined ratio, and the power that can be ramped up is calculated (see FIG. 5). Since not the whole extra power is used as the increasing portion of the maximum transmission power $P_m$, it is possible to prevent transmission power from reaching the maximum transmission power $P_s$ due to the fluctuation of power on the secondary base station SeNB side. Also, it is possible to prevent the total transmission power from reaching the maximum transmission power $P_t$ when the transmission power on both the master base station MeNB side and the secondary base station SeNB side reaches the maximum transmission power $P_m$ and $P_s$.

Referring again to step 2 and 3 of the above-described transmission power control, the upper limit value in the event the maximum transmission power $P_m$ is raised will be described. By providing the upper limit value for the maximum transmission power $P_m$, it is possible to secure the quality of transmission in the secondary base station SeNB.

For the user terminal, the upper limit values for both of the maximum transmission power $P_m$ and $P_s$ or the upper limit value for one of the maximum transmission power $P_m$ and $P_s$ may be signaled through a higher layer and so on. The upper limit value of the maximum transmission power $P_m$ may be signaled in an absolute value, or the difference from the initial value of the maximum transmission power $P_m$ may be signaled. Also, the upper limit value may be defined as the maximum possible transmission power of the user terminal.

The upper limit value of the maximum transmission power $P_m$ may be determined to keep a certain difference from the initial value of the maximum transmission power $P_m$ (for example, 3[dB]). In this case, the above-noted signaling over head is not necessary.

The upper limit value of the maximum transmission power $P_m$ may be determined taking into account the power on the secondary base station SeNB side. For example, it is possible to leave transmission power for a certain amount of resource blocks -- for example, secure resources for transmitting the PUCCH to the secondary base station SeNB -- and determine the upper limit value of the maximum transmission power $P_m$.

Alternatively, the upper limit value of the maximum transmission power $P_m$ is not particularly provided. That is, by giving the power on the master base station MeNB side the highest priority, the user terminal's maximum transmission power (for example, $P_{cmax}$) may be made the upper limit value of the maximum transmission power $P_m$.

Referring to steps 2 and 3 of the above-described transmission power control, the method of sending a report to the network when one or both of the maximum transmission power $P_m$ and $P_s$ change will be described. If the network -- in particular, the secondary base station SeNB side -- fails to know the user terminal's extra transmission power or transmission power itself, this may be a disadvantage in scheduling, power control, and so on in the secondary base station SeNB.

For the information to report the increase of the maximum transmission power, an existing PHR may be used.

Although existing PHRs are stipulated on a per component carrier (CC) basis, here, the PHR from the total transmission power ($P_{cmax}$) may be reported. This is because, when raising the maximum transmission power $P_m$, it is necessary to know the extra power including that of other base stations, other cell groups (CGs) or other component carriers (CCs) as well. Also, by reporting the above PHR for every cell group (CG), it is possible to execute power control in an autonomous distributed manner, for every base station, and reduce the overhead of reporting signals.

For the information to report the increase of the maximum transmission power $P_m$ to the network, the ramp-up value or the accumulated value thereof may be reported to the base station. In particular, when an uplink signal is transmitted, by piggybacking a ramp-up value adjusted to the transmitting signal, it is possible to realize a report without delay. To report ramp-up values, the ramping indices shown in FIG. 4B can be used. Although the ramping indices shown in FIG. 4B include negative values, by including negative values, it becomes possible to give power resources to other base stations taking into account the state of communication such as traffic In this case, the sum value of power the base stations give each other should be 0, and so $P_m-\Delta=P_s'$ may be defined. Note that $P_s'$ is the value of the maximum transmission power $P_s$ after the ramp up process. For example, when the ramping index is "0," the maximum transmission power $P_m$ is made -3[dB], so that the maximum transmission power $P_s'$ after the ramp up process is made +3[dB].

Although the ramping indices shown in FIG. 4B include a plurality of negative values such as $\Delta=-3$ and -1, it is possible to reduce the number of control bits by not applying ramping or by including information to the effect that the ramping value is negative. This is because, when $\Delta$ is 0 or a negative value, there is little impact on other cells.

For the information for reporting the increase of the maximum transmission power $P_m$ to the network, for example, the previous TTI (Transmission Time Interval) and the difference from this TTI may be reported. In this case, the number of signaling bit can be reduced.

As examples of physical channels for reporting the increase of the maximum transmission power $P_m$ to the network, a MAC CE and/or the PUSCH may be used. Alternatively, piggybacking on data signals may be possible as well. Also, the increase of the maximum transmission power $P_m$ may be reported to the network, on the user terminal's discretion, by using PRACH and/or D2D (Device to Device) signals. By using PRACH and/or D2D signals, it becomes possible to report information to the secondary base station SeNB directly.

The destination where the increase of the maximum transmission power $P_m$ is reported may be, for example, the master base station MeNB, which is the main control station. Also, given that it is the secondary base station SeNB where the scheduling, power control and so on are limited when the maximum transmission power $P_m$ on the master base station MeNB side increases, the secondary base station SeNB may be the destination to report the increase of the maximum transmission power $P_m$. By reporting the increase of the maximum transmission power $P_m$ to the secondary base station SeNB directly, it becomes possible to report information with low delays.

Alternatively, when the maximum transmission power $P_m$ increases, a report may be sent to both the master base station MeNB and the secondary base station SeNB. In this case, in addition to achieving the above-described effects, it is also possible to allow the two to share information and coordinate with each other.

In step 4 of the above-described transmission power control, when the value of the maximum transmission power $P_s$ on the secondary base station SeNB side becomes too low, there is a risk that the quality of communication in the secondary base station SeNB lowers significantly. By contrast with this, it is equally possible to determine two patterns of maximum transmission power $P_m$ for when the data that is transmitted from the master base station MeNB has low priority and when the data has high priority, and control the maximum transmission power $P_m$ to change depending on data. Note that the low priority data to be transmitted from the master base station MeNB refers to, for example, the PUSCH to which no UCI is allocated, and the high priority data refers to data other than this.

Referring to step 4 of the above-described transmission power control, the method of resetting the maximum transmission power $P_m$ will be described.

When the master base station MeNB no longer requires high power, the state in which the transmission power on the master base station MeNB side has reached the maximum transmission power $P_m$ is resolved, so that the

maximum transmission power $P_m$ may be made the initial value.

When the secondary base station SeNB runs short of power, the maximum transmission power $P_m$ on the master base station MeNB side may be made the initial value. Also, it is equally possible to secure a certain amount of resource blocks -- for example, resources for the PUCCH, the PRACH or audio data -- for the maximum transmission power $P_m$, and reduce the maximum transmission power $P_m$.

When, following the control of the transmission power $P_m$, a certain period of time passes, the propagation state and the traffic are likely to have changed, so that the maximum transmission power $P_m$ may be reset to the initial value with a timer.

The maximum transmission power $P_m$ may be reset to the initial value at the timing of deactivation, RACH transmission, and so on.

Although a structure has been described with the present embodiment, in which the value of the maximum transmission power $P_m$ is controlled to be raised when the transmission power on the master base station MeNB side is detected to have reached the maximum transmission power $P_m$, this is by no means limiting, and it is equally possible to employ a structure, in which the value of the maximum transmission power $P_s$ is controlled to be raised when the transmission power on the secondary base station SeNB side is detected to have reached the maximum transmission power $P_s$. Alternatively, a structure may be possible, in which whether or not the maximum transmission power can be raised is specified on a per base station basis, regardless of the classification between the master base station MeNB and the secondary base station SeNB.

Although a structure has been shown with the present embodiment where a user terminal communicates with one master base station MeNB and one secondary base station SeNB, this is by no means limiting, and, for example, a structure may be employed, in which the user terminal communicates with a master base station MeNB and a plurality of secondary base stations SeNBs.

Although a structure has been shown with the present embodiment where transmission power control is executed based on the classification between the master base station MeNB and the secondary base station SeNB, this is by no means limiting, and, for example, a structure may be employed, in which transmission power control is executed per component carrier (CC), per cell group (CG) and so on.

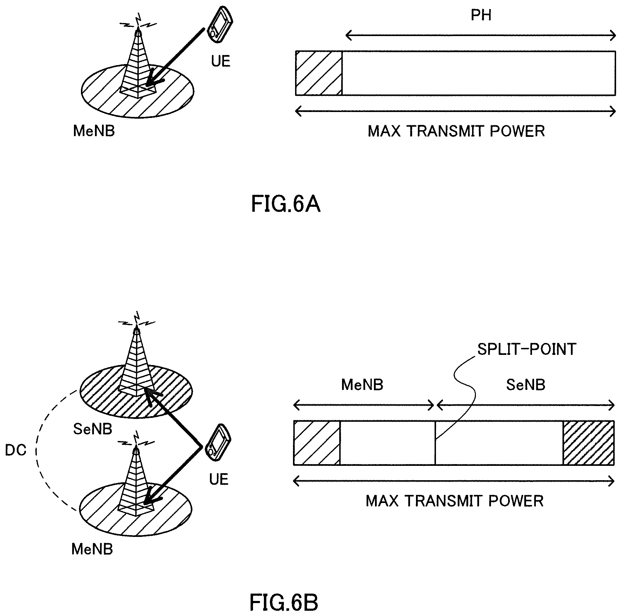

Although dual connectivity (DC) is formed in the state in which a user terminal and a master base station MeNB are connected (see FIG. 6A), the user terminal is triggered, when a secondary base station SeNB is configured, to transmit a PHR to the master base station MeNB. Based on the PHR transmitted from the user terminal, the master base station MeNB determines the power to allocate to the secondary base station SeNB, and the split point (see FIG. 6B).

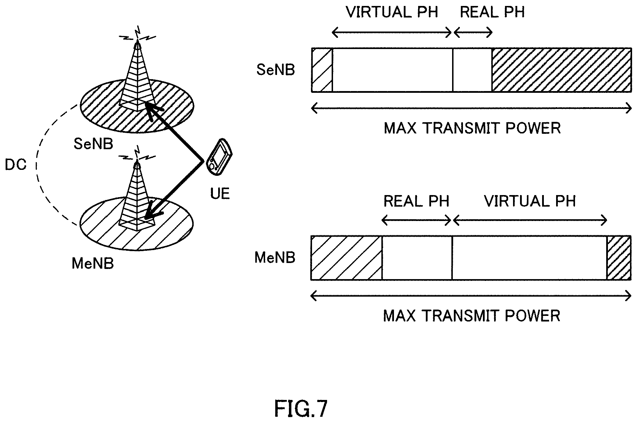

Nevertheless, in this case, it is necessary to optimize and adjust the split point. The master base station MeNB arranges the split point based on the PHR from the user terminal. For the PHR for the master base station MeNB, the user terminal reports a real PHR for the master cell group (MCG) and a virtual PHR for the secondary cell group (SCG) (see FIG. 7). For the PHR for the secondary base station SeNB, the user terminal reports a virtual PHR for the master cell group (MCG) and a real PHR for the secondary cell group (SCG) (see FIG. 7).

A virtual PHR refers to the kind of PHR that is used when specific uplink transmission is presumed. Specific uplink transmission in this case may be PUSCH transmission, which presumes a specific number of resource blocks. Consequently, this is a PHR that is determined independently of actual uplink allocation, and the path loss $PL_c$ and the correction value $f_c(i)$ by a TPC command in above equation 1 can be learned. Note that a virtual PHR may be calculated by presuming PUCCH transmission. The accumulation of TPC commands varies between the PUCCH and the PUSCH, so that, by calculating a virtual PHR by presuming PUCCH transmission, the base stations can learn the path loss and the TPC command-based correction value adequately.

The configuration of a secondary base station SeNB is used as a trigger for transmitting a PHR to the master base station MeNB, so that the master base station MeNB can learn how much power should be left in the subject base station.

The PHR that is triggered and transmitted when a secondary base station SeNB is configured may include a virtual PHR for the secondary base station SeNB. This virtual PHR is calculated based on the assumption that the split point is in a specific location. By this means, the master base station MeNB can learn the path loss on the secondary base station SeNB side, and, furthermore, determine the power to allocate to the secondary base station SeNB.

The user terminal may use change of the split point or $P_{cmax}$ as a trigger to transmit a PHR to the master base station MeNB or the secondary base station SeNB. The PHR to transmit to the master base station MeNB includes information about the real PH of the master cell group MCG and a virtual PH of the secondary cell group SCG. The PHR to transmit to the secondary base station SeNB includes information about the real PH of the secondary cell group (SCG) and a virtual PH of the master cell group (MCG). By this means, even during the operation in which the master base station MeNB commands changes of the split point and $P_{cmax}$ in a one-sided manner, PHR reports from the user terminal allow the secondary base station SeNB to accurately learn the extra power that can be used later.

Next, the method of calculating PHRs will be described. In dual connectivity (DC), the timings of transmission vary between base stations, so that the value of the PHR changes depending on in which timing the PHR is calculated.

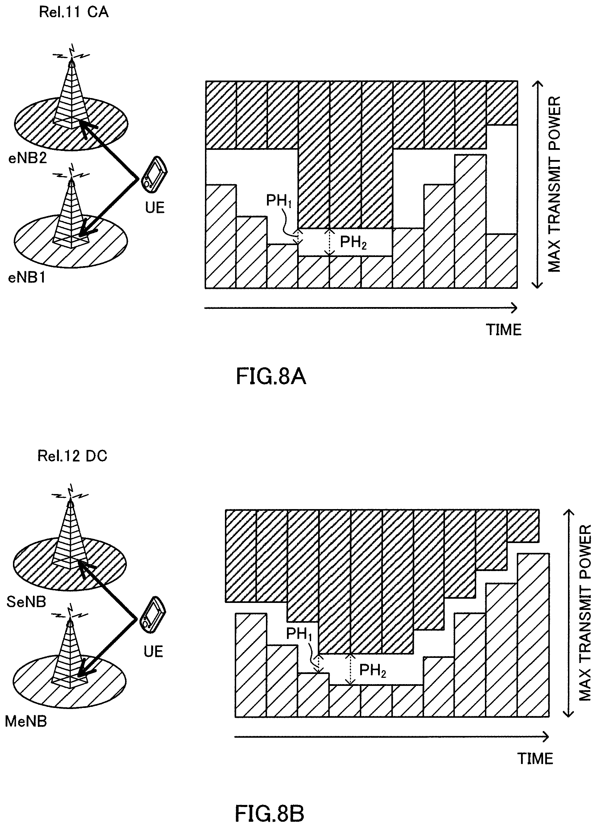

Referring to FIG. 8A, the timings of transmission match between the base stations in carrier aggregation (CA), so that, for example, when a PHR is calculated with respect to an arbitrary subframe on the base station eNB2 side, the value ($PH_1$) of the PHR calculated at the top of the subframe and the value ($PH_2$) of the PHR calculated at the end of the subframe are the same value.

Referring to FIG. 8B, the timings of transmission vary between base stations in dual connectivity (DC), so that, for example, when a PHR is calculated with respect to an arbitrary subframe on the secondary base station SeNB side, the value ($PH_1$) of the PHR calculated at the top of the subframe and the value ($PH_2$) of the PHR calculated at the end of the subframe are different values. Consequently, unless some rule is stipulated, ambiguity is produced on the network side.

So, in dual connectivity (DC), the rule to calculate a PHR at the timing at the top of a subframe may be stipulated. That is, $PH_1$ in FIG. 8B is used as the value of the PHR of that subframe. In this case, there is an advantage that complex processing is not required in the terminal.

Also, in dual connectivity (DC), the rule may be stipulated to calculate the PHR at the timing at the end of a subframe. That is, $PH_2$ shown in FIG. 8B is made the PHR value of that subframe. In this case, again, there is an advantage that complex processing is not required in the terminal.

Also, in dual connectivity (DC), the rule may be stipulated to make a subframe with a large overlap in time the target for the calculation of a PHR. In the example shown in FIG. 8B, with an arbitrary subframe on the secondary base station SeNB side, the subframe on the master base station MeNB side where $PH_2$ is the PHR value shows a greater overlap in time than the subframe on the master base station MeNB side where $PH_1$ is the PHR value. Consequently, in this example, $PH_2$ is made the PHR value of the arbitrary subframe on the secondary base station SeNB side. In this case, a more predominant subframe can be taken into consideration.

Furthermore, in dual connectivity (DC), the rule may be stipulated to find the average between two overlapping subframes, and calculate a PHR that takes into account the two subframes. In this case, a more accurate PHR can be calculated by applying a weight that matches the length of the overlapping portion. In the example shown in FIG. 8B, with an arbitrary subframe on the secondary base station SeNB side, the subframe on the master base station MeNB side where $PH_1$ is the PHR value and the subframe on the master base station MeNB side where $PH_2$ is the PHR value overlap at a ratio of 1: 2, so that, taking this into account, the weighted mean of $PH_1$ and $PH_2$ is made the PHR value of the arbitrary subframe on the secondary base station SeNB side.

(Structure of Radio Communication System)

Now, the structure of the radio communication system according to the present embodiment will be described below. In this radio communication system, a radio communication method to execute the above-described transmission power control is employed.

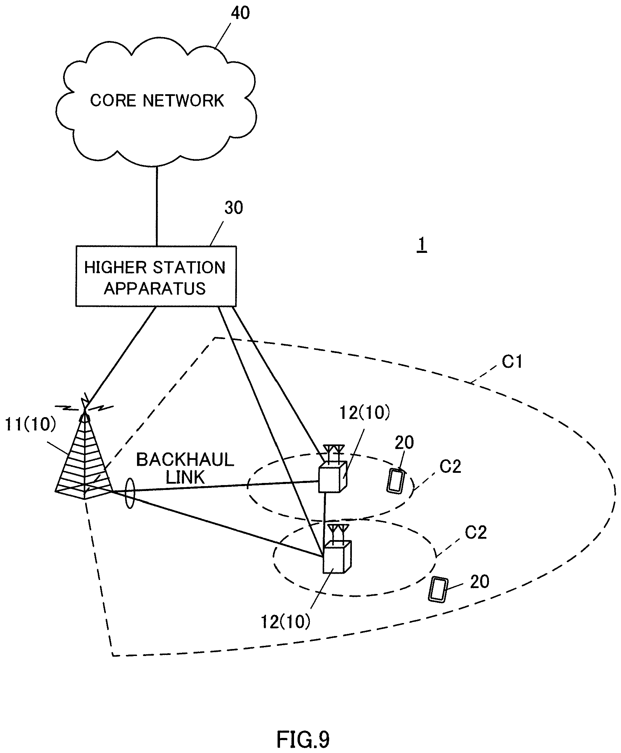

FIG. 9 is a schematic structure diagram to show an example of the radio communication system according to the present embodiment. As shown in FIG. 9, a radio communication system 1 is comprised of a plurality of radio base stations 10 (11 and 12), and a plurality of user terminals 20 that are present within cells formed by each radio base station 10 and that are configured to be capable of communicating with each radio base station 10. The radio base stations 10 are each connected with a higher station apparatus 30, and are connected to a core network 40 via the higher station apparatus 30.

In FIG. 9, the radio base station 11 is, for example, a macro base station having a relatively wide coverage, and forms a macro cell C1. The radio base stations 12 are, for example, small base stations having local coverages, and form small cells C2. Note that the number of radio base stations 11 and 12 is not limited to that shown in FIG. 9.

In the macro cell C1 and the small cells C2, the same frequency band may be used, or different frequency bands may be used. Also, the macro base stations 11 and 12 are connected with each other via an inter-base station interface (for example, optical fiber, the X2 interface, etc.).

Between the radio base station 11 and the radio base stations 12, between the radio base station 11 and other radio base stations 11, or between the radio base stations 12 and other radio base stations 12, dual connectivity (DC) or carrier aggregation (CA) is employed.

User terminals 20 are terminals to support various communication schemes such as LTE, LTE-A and so on, and may include both mobile communication terminals and stationary communication terminals. The user terminals 20 can communicate with other user terminals 20 via the radio base stations 10.

The higher station apparatus 30 may be, for example, an access gateway apparatus, a radio network controller (RNC), a mobility management entity (MME) and so on, but is by no means limited to these.

In the radio communication system 1, a downlink shared channel (PDSCH: Physical Downlink Shared Channel), which is used by each user terminal 20 on a shared basis, downlink control channels (PDCCH (Physical Downlink Control Channel), EPDCCH (Enhanced Physical Downlink Control Channel), etc.), a broadcast channel (PBCH) and so on are used as downlink channels. User data, higher layer control information and predetermined SIBs (System Information Blocks) are communicated in the PDSCH. Downlink control information (DCI) is communicated by the PDCCH and the EPDCCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink channels. User data and higher layer control information are communicated by the PUSCH.

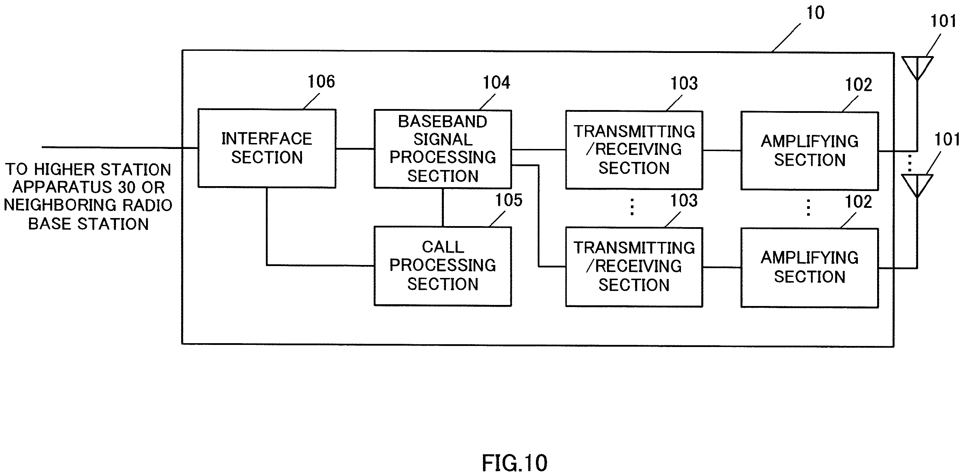

FIG. 10 is a diagram to show an overall structure of a radio base station 10 according to the present embodiment. As shown in FIG. 10, the radio base station 10 has a plurality of transmitting/receiving antennas 101 for MIMO communication, amplifying sections 102, transmitting/receiving sections 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts the downlink signals, pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

Each transmitting/receiving section 103 transmits the maximum transmission power values $P_m$ and $P_s$ for each cell group to the user terminals. Reports of changes of the maximum transmission power value $P_m$ are received from the user terminals and received in each transmitting/receiving section 103.

In the baseband signal processing section 104, user data that is included in the input uplink signals is subjected to an FFT process, an IDFT process, error correction decoding, a MAC retransmission control receiving process, and RLC layer and PDCP layer receiving processes, and the result is forwarded to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

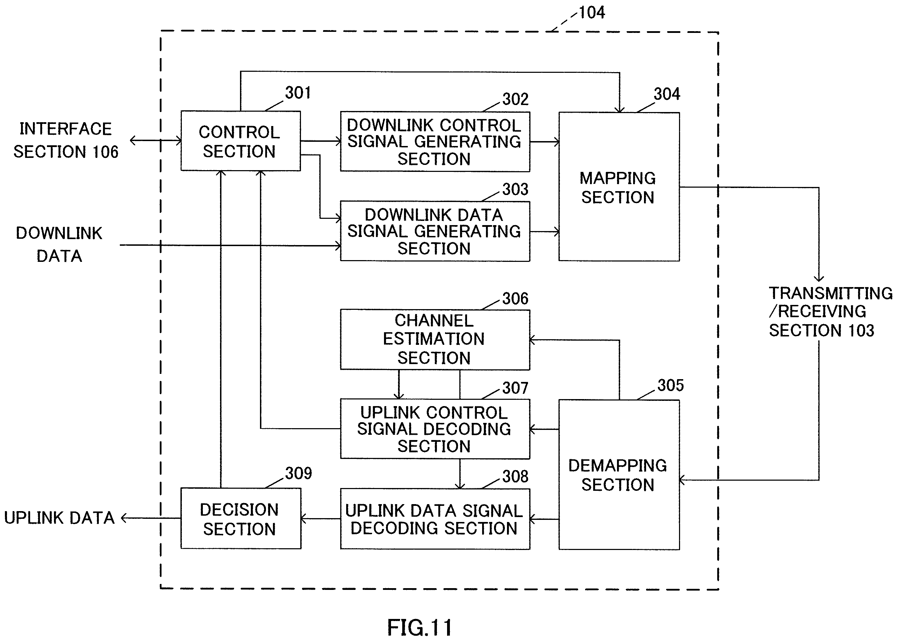

FIG. 11 is a diagram to show a principle functional structure of the baseband signal processing section 104 provided in the radio base station 10 according to the present embodiment. As shown in FIG. 11, the baseband signal processing section 104 provided in the radio base station 10 is comprised at least of a control section 301, a downlink control signal generating section 302, a downlink data signal generating section 303, a mapping section 304, a demapping section 305, a channel estimation section 306, an uplink control signal decoding section 307, an uplink data signal decoding section 308 and a decision section 309.

The control section 301 controls the scheduling of downlink user data that is transmitted in the PDSCH, downlink control information that is communicated in one or both of the PDCCH and the enhanced PDCCH (EPDCCH), downlink reference signals and so on. Also, the control section 301 controls the scheduling of RA preambles communicated in the PRACH, uplink data that is communicated in the PUSCH, uplink control information that is communicated in the PUCCH or the PUSCH, and uplink reference signals (allocation control). Information about the allocation control of uplink signals (uplink control signals, uplink user data, etc.) is reported to the user terminals 20 by using a downlink control signal (DCI).

The control section 301 controls the allocation of radio resources to downlink signals and uplink signals based on command information from the higher station apparatus 30, feedback information from each user terminal 20 and so on. That is, the control section 301 functions as a scheduler.

The control section 301 controls transmission power within the ranges of the maximum transmission power values $P_m$ and $P_s$ for the subject cell group.

The downlink control signal generating section 302 generates downlink control signals (which may be both PDCCH signals and EPDCCH signals, or may be one of these) that are determined to be allocated by the control section 301. To be more specific, the downlink control signal generating section 302 generates a downlink assignment, which reports downlink signal allocation information, and an uplink grant, which reports uplink signal allocation information, based on commands from the control section 301.

The downlink data signal generating section 303 generates downlink data signals (PDSCH signals) that are determined to be allocated to resources by the control section 301. The data signals generated in the downlink data signal generating section 303 are subjected to a coding process and a modulation process, using coding rates and modulation schemes that are determined based on CSI (Channel State Information) from each user terminal 20 and so on.

The mapping section 304 controls the allocation of the downlink control signals generated in the downlink control signal generating section 302 and the downlink data signals generated in the downlink data signal generating section 303 to radio resources based on commands from the control section 301.

The demapping section 305 demaps the uplink signals transmitted from the user terminals 20 and separates the uplink signals. The channel estimation section 306 estimates channel states from the reference signals included in the received signals separated in the demapping section 305, and outputs the estimated channel states to the uplink control signal decoding section 307 and the uplink data signal decoding section 308.

The uplink control signal decoding section 307 decodes the feedback signals (delivery acknowledgement signals and/or the like) transmitted from the user terminals in the uplink control channel (PRACH, PUCCH, etc.), and outputs the results to the control section 301. The uplink data signal decoding section 308 decodes the uplink data signals transmitted from the user terminals through an uplink shared channel (PUSCH), and outputs the results to the decision section 309. The decision section 309 makes retransmission control decisions (A/N decisions) based on the decoding results in the uplink data signal decoding section 308, and outputs results to the control section 301.

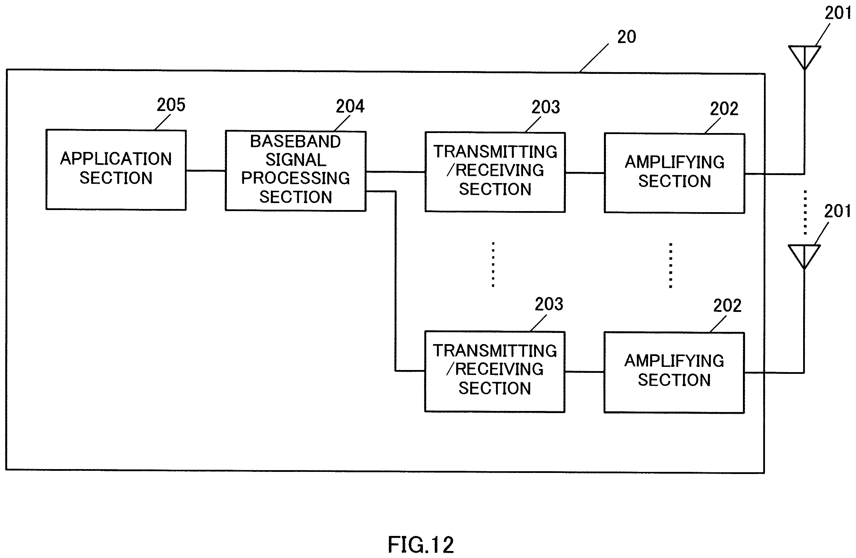

FIG. 12 is a diagram to show an overall structure of a user terminal 20 according to the present embodiment. As shown in FIG. 12, the user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on in the baseband signal processing section 204. In this downlink data, downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. In the baseband signal processing section 204, a retransmission control (HARQ: Hybrid ARQ) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

The transmitting/receiving sections 203 receive information about the maximum transmission power $P_m$ and $P_s$ to be configured for each cell group configured by the master base station MeNB, and/or information about the upper limit value of the maximum transmission power $P_m$. When the maximum transmission power $P_m$ increases, the transmitting/receiving section 203 sends a report to the network.

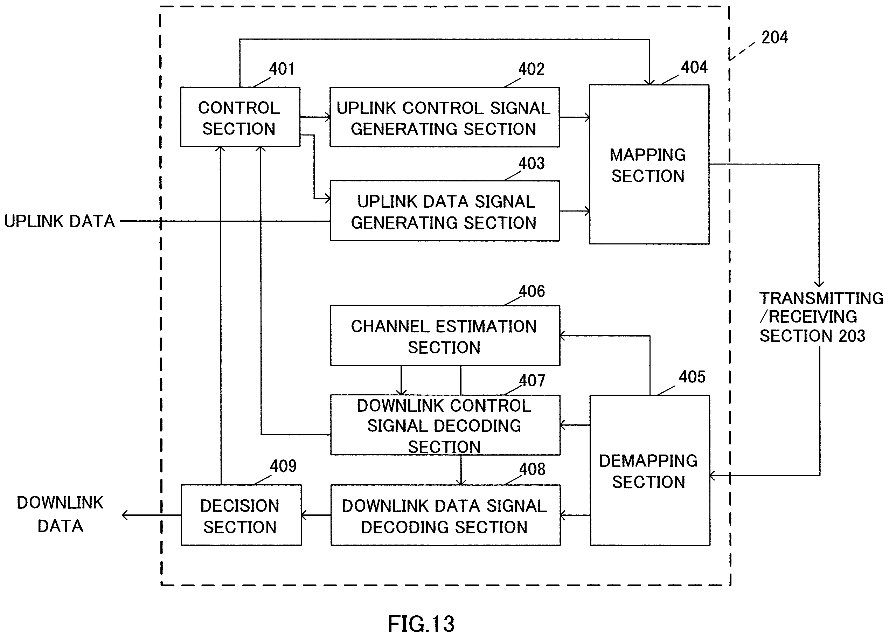

FIG. 13 is a diagram to show a principle functional structure of the baseband signal processing section 204 provided in the user terminal 20. As shown in FIG. 13, the baseband signal processing section 204 provided in the user terminal 20 is comprised at least of a control section 401, an uplink control signal generating section 402, an uplink data signal generating section 403, a mapping section 404, a demapping section 405, a channel estimation section 406, a downlink control signal decoding section 407, a downlink data signal decoding section 408 and a decision section 409.

The control section 401 controls the generation of uplink control signals (A/N signals, etc.), uplink data signals and so on, based on the downlink control signals (PDCCH signals) transmitted from the radio base stations 10, retransmission control decisions in response to the PDSCH signals received, and so on. The downlink control signals received from the radio base stations are output from the downlink control signal decoding section 408, and the retransmission control decisions are output from the decision section 409.

The control section 401 functions as a power control section that controls the maximum transmission power value $P_m$ for the master cell group (MCG) to be changed when a predetermined condition is met.

The uplink control signal generating section 402 generates uplink control signals (feedback signals such as delivery acknowledgement signals, channel state information (CSI) and so on) based on commands from the control section 401. The uplink data signal generating section 403 generates uplink data signals based on commands from the control section 401. Note that, when an uplink grant is contained in a downlink control signal reported from the radio base station, the control section 401 commands the uplink data signal 403 to generate an uplink data signal.

The mapping section 404 controls the allocation of the uplink control signals (delivery acknowledgment signals and so on) and the uplink data signals to radio resources (PUCCH, PUSCH, etc.) based on commands from the control section 401.

The demapping section 405 demaps the downlink signals transmitted from the radio base station 10 and separates the downlink signals. The channel estimation section 407 estimates channel states from the reference signals included in the received signals separated in the demapping section 406, and outputs the estimated channel states to the downlink control signal decoding section 407 and the downlink data signal decoding section 408.

The downlink control signal decoding section 407 decodes the downlink control signal (PDCCH signal) transmitted in the downlink control channel (PDCCH), and outputs the scheduling information (information regarding the allocation to uplink resources) to the control section 401. Also, when information related to the cell to feed back delivery acknowledgement signals or information as to whether or not to apply RF tuning is included in a downlink control signal, these pieces of information are also output to the control section 401.

The downlink data signal decoding section 408 decodes the downlink data signals transmitted in the downlink shared channel (PDSCH), and outputs the results to the decision section 409. The decision section 409 makes retransmission control decisions (A/N decisions) based on the decoding results in the downlink data signal decoding section 408, and outputs the results to the control section 401.

Note that the present invention is by no means limited to the above embodiment and can be carried out with various changes. The sizes and shapes illustrated in the accompanying drawings in relationship to the above embodiment are by no means limiting, and may be changed as appropriate within the scope of optimizing the effects of the present invention. Besides, implementations with various appropriate changes may be possible without departing from the scope of the object of the present invention.

The disclosure of Japanese Patent Application No. 2014-058259, filed on March 20, 2014, including the specification, drawings and abstract, is incorporated herein by reference in its entirety.

**Claims**

1. A user terminal that communicates with a plurality of cell groups, each cell group being comprised of one or more cells that use different frequencies, the user terminal comprising:

   a power control section that controls a maximum transmission power value for each cell group, which is given by splitting allowable maximum transmission power of the subject user terminal semi-statically, and controls the maximum transmission power value for a specific cell group to be changed when a predetermined condition is met; and
   a transmission section that reports the maximum transmission power value after the change to a radio base station forming the cell group.

2. The user terminal according to claim 1, wherein the power control section executes control so that, when transmission power of the specific cell group is detected to have reached the maximum transmission power value configured for the cell group, the maximum transmission power value is raised.

3. The user terminal according to claim 1, wherein the power control section executes control so that the maximum transmission power value assumes a desired transmission power value for the specific cell group.

4. The user terminal according to claim 1, further comprising a receiving section that receives an upper limit value of the maximum transmission power value for the specific cell group,
   wherein the power control section controls the maximum transmission power value to be raised but not exceed the upper limit value.

5. The user terminal according to claim 1, wherein the power control section applies ramping to the maximum transmission power value until a state in which transmission power for the specific cell group has reached the maximum transmission power value configured for the cell group is resolved.

6. The user terminal according to claim 5, wherein the transmission section transmits a control signal for reporting a ramping index.

7. The user terminal according to claim 1, wherein the transmission section transmits a control signal comprising a power head room, the maximum transmission power value for the specific cell group and the maximum transmission power values for another cell group.

8. The user terminal according to claim 1, wherein the specific cell group is a master cell group.

9. A radio base station that forms a cell group comprised of one or more cells to use different frequencies, and that communicates with a user terminal by employing dual connectivity with another radio base station forming a different cell group, the radio base station comprising:

   a transmission section that transmits a maximum transmission power value for each cell group to the user terminal;
   a control section that controls transmission power within a range of the maximum transmission power value for a subject cell group; and
   a receiving section that receives a report of change of the maximum transmission power values from the user terminal.

10. A radio communication method in a user terminal that communicates with a plurality of cell groups, each cell group being comprised of one or more cells that use different frequencies, the radio communication method comprising the steps of:

   controlling a maximum transmission power value for each cell group, which is given by splitting allowable maximum transmission power of the subject user terminal semi-statically;
   controlling the maximum transmission power value of a specific cell group to be changed when a predetermined condition is met; and
   reporting the maximum transmission power value after the change to a radio base station forming the cell group.

CA (CARRIER AGGREGATION)

FIG.1A

DC (DUAL CONNECTIVITY)

FIG.1B

DC (DUAL CONNECTIVITY)

FIG.2

DYNAMIC POWER-SHARING (CA)

eNB2

UE

eNB1

TOTAL TRANSMIT POWER

TIME

FIG.3A

SEMI-STATIC POWER-SPLITTING

SeNB

UE

MeNB

$P_s$

$P_m$

TOTAL TRANSMIT POWER

TIME

FIG.3B

| Pm |
| --- |
| Ps |
| ePHR IN Rel-10 |

FePHR MAC CE

# FIG.4A

| RAMPING INDEX |
| --- |

POWER RAMPING MAC CE

POWER RAMPING

| INDEX | Δ [dB] |
| --- | --- |
| 0 | −3 |
| 1 | −1 |
| 2 | 1 |
| 3 | 3 |
| 4 | 6 |
| 5 | 9 |

# FIG.4B

SEMI-STATIC POWER-SPLITTING

FIG.5

PH

MAX TRANSMIT POWER

FIG.6A

SPLIT-POINT

MeNB    SeNB

MAX TRANSMIT POWER

FIG.6B

FIG.7

Rel.11 CA

FIG.8A

Rel.12 DC

FIG.8B

FIG.9

FIG.10

TRANSMITTING /RECEIVING SECTION 103

104

304 MAPPING SECTION

305 DEMAPPING SECTION

302 DOWNLINK CONTROL SIGNAL GENERATING SECTION

303 DOWNLINK DATA SIGNAL GENERATING SECTION

306 CHANNEL ESTIMATION SECTION

307 UPLINK CONTROL SIGNAL DECODING SECTION

308 UPLINK DATA SIGNAL DECODING SECTION

301 CONTROL SECTION

309 DECISION SECTION

INTERFACE SECTION 106

DOWNLINK DATA

UPLINK DATA

FIG.11

FIG.12

FIG.13

204

TRANSMITTING /RECEIVING SECTION 203

404 MAPPING SECTION

405 DEMAPPING SECTION

402 UPLINK CONTROL SIGNAL GENERATING SECTION

403 UPLINK DATA SIGNAL GENERATING SECTION

406 CHANNEL ESTIMATION SECTION

407 DOWNLINK CONTROL SIGNAL DECODING SECTION

408 DOWNLINK DATA SIGNAL DECODING SECTION

401 CONTROL SECTION

409 DECISION SECTION

UPLINK DATA

DOWNLINK DATA

28

## INTERNATIONAL SEARCH REPORT

| International application No. |
| --- |
| PCT/JP2015/050806 |

**A. CLASSIFICATION OF SUBJECT MATTER**
*H04W52/30(2009.01)i, H04J1/00(2006.01)i, H04W52/40(2009.01)i, H04W72/04 (2009.01)i*

According to International Patent Classification (IPC) or to both national classification and IPC

**B. FIELDS SEARCHED**

Minimum documentation searched (classification system followed by classification symbols)
H04W4/00-99/00, H04J1/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | Panasonic, "Uplink transmission power management and PHR reporting for dual connectivity", 3GPP TSG RAN WG2 Meeting #84 R2-140477, 2014.01.31, pp.1-3 | 1-10 |
| Y | Qualcomm Incorporated, "Physical layer aspects for dual connectivity", 3GPP TSG RAN WG1 #76 R1-140455, 2014.02.01, pp.1-5 | 1-10 |
| A | JP 2012-525081 A (Interdigital Patent Holdings, Inc.), 18 October 2012 (18.10.2012), paragraphs [0035] to [0052] & US 2010/0273520 A1 & WO 2010/124192 A2 & KR 10-2012-0005530 A | 1-10 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 April 2015 (09.04.15) | 21 April 2015 (21.04.15) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (July 2009)

**EP 3 122 122 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014058259 A